# EUROPEAN PATENT APPLICATION

(11) **EP 4 556 321 A1**
(43) Date of publication of application: **21.05.2025**
(21) Application number: 23862965.3
(22) Date of filing: 25.08.2023
(51) Int. Cl.: B60R 22/405

(54) **RETRACTOR AND SEAT BELT DEVICE**

(30) Priority: 06.09.2022 JP 2022141741
(71) Applicant: Joyson Safety Systems Japan G.K., Echi-gun, Shiga 529-1388 (JP)
(72) Inventor: YOSHIOKA Hirokazu, Echi-gun Shiga 529-1388 (JP); NISHI Yoshitsugu, Echi-gun Shiga 529-1388 (JP)
(74) Representative: Kraus & Lederer PartGmbB
(86) International application number: PCT/JP2023/030670
(87) International publication number: WO 2024/053426

(57) **Abstract**

Provided are a retractor and a seat belt device with which the occurrence of vibration noise can be reduced. A retractor 1 according to one embodiment of the present invention is provided with a lock mechanism 4 that restricts rotation of a spool 2, and the lock mechanism 4 is provided with a lock gear 41 that can rotate relative to and that is disposed coaxially with the spool 2, and a flywheel 43 that is disposed on the lock gear 41 and that moves a pawl 42 via the relative rotation between the spool 2 and the lock gear 41. The flywheel 43 has a protrusion 43f that is disposed at the tip in the relative rotation direction R. The lock gear 41 has a stopper 41i configured so as to come into contact with the protrusion 43f and tilt the orientation of the flywheel 43 when the flywheel 43 is not in operation, and to cease contact with the protrusion 43f when the flywheel 43 is in operation.

## Description

### TECHNICAL FIELD

The present invention relates to a retractor and a seat belt device, and more particularly to a retractor and a seat belt device capable of reducing the generation of vibration noise.

### BACKGROUND ART

Vehicles such as automobiles are generally provided with a seat belt device that restrains an occupant on a seat having a seat portion on which the occupant sits and a backrest portion positioned behind the occupant. Such a seat belt device includes a webbing that restrains the occupant, a retractor that winds up the webbing, a buckle that is disposed on a side surface of the seat, and a tongue that is disposed on the webbing, and the occupant is restrained on the seat with the webbing by fitting the tongue into the buckle.

Such a retractor often includes a spool that winds up the webbing, a base frame that rotatably accommodates the spool, a spring unit that applies a winding force to the spool, a vehicle sensor that detects a sudden deceleration of the vehicle, a lock mechanism that is operated by the vehicle sensor to engage the spool with the base frame, and a pretensioner that removes slack of the webbing in an emergency such as a vehicle collision.

For example, Patent Literature 1 discloses a part of a block device that includes a control disk as a lock mechanism. An inertial mass is disposed on the control disk so as to be pivotable about a pivot shaft. In the invention described in Patent Literature 1, in order to reduce noise (vibration noise) caused by the inertial mass, an L-shaped protrusion is disposed to abut against an abutting surface formed on an outer edge of the inertial mass. The control disk may be referred to as a lock gear, and the inertial mass may be referred to as a flywheel.

### CITATION LIST

### PATENT LITERATURE

Patent Literature 1: JP5545910B

### SUMMARY OF INVENTION

### TECHNICAL PROBLEM

However, in a state in which the protrusion and the inertial mass (flywheel) are in contact with each other as described in Patent Literature 1, it is a factor to inhibit a pivot motion of the inertial mass (flywheel), and thus it is necessary to set a little gap. Therefore, the gap becomes a factor in generating the vibration noise.

The present invention has been made in view of the above-described problems, and an object of the present invention is to provide a retractor and a seat belt device capable of reducing the generation of vibration noise.

### SOLUTION TO PROBLEM

According to the present invention, there is provided a retractor including: a spool configured to wind up a webbing that restrains an occupant; a base frame configured to rotatably accommodate the spool; and a lock mechanism configured to restrict the rotation of the spool, in which the lock mechanism includes a lock gear disposed coaxially with the spool so as to be rotatable relative to the spool, a pawl disposed so as to be engageable with the base frame, a flywheel disposed on the lock gear and configured to move the pawl by a relative rotation between the spool and the lock gear, and a hook spring that biases the flywheel in a direction opposite to a relative rotation direction during operation, the flywheel has a protrusion disposed at a distal end in the relative rotation direction, and the lock gear has a stopper that is in contact with the protrusion to tilt a posture of the flywheel during non-operation, and releases the contact with the protrusion during operation.

The stopper may have a tapered surface at a portion that comes into contact with the protrusion.

The stopper may include a support portion erected from the lock gear and a protruding portion formed to be able to come into contact with an upper portion of the protrusion.

The protrusion may have a curved surface at a portion that comes into contact with the stopper.

The flywheel may be supported by the lock gear at three points during non-operation.

The lock gear may include a pivot shaft that pivotably supports the flywheel, a plurality of engagement claws arranged on an outer periphery of the pivot shaft, and a guide portion formed along an outer periphery of a root portion of the pivot shaft, the flywheel may include an insertion hole into which the pivot shaft is to be inserted, and engagement holes with which the engagement claws are engaged, and the flywheel may be configured to be supported by the stopper, the engagement claws, and the guide portion during non-operation.

The hook spring may be disposed so as to bias the protrusion in a direction in which the protrusion is in contact with the stopper during non-operation.

According to the present invention, there is provided a seat belt device including the retractor having any one of the above configurations.

### ADVANTAGEOUS EFFECTS OF INVENTION

According to the retractor and the seat belt device of the present invention, during non-operation of the flywheel, the protrusion formed on the flywheel is in contact with the stopper formed on the lock gear to tilt the posture of the flywheel, thereby eliminating a gap in the flywheel that is necessary during operation of the flywheel and reducing the generation of vibration noise in the retractor and the seat belt device during non-operation.

### BRIEF DESCRIPTION OF DRAWINGS

FIG. 1 is a component exploded view showing a retractor according to an embodiment of the present invention.
FIG. 2 is a plan view showing a state in which a flywheel is assembled to a lock gear shown in FIG. 1.
FIG. 3 includes cross-sectional views of components shown in FIG. 2, in which (A) is a cross-sectional view taken along a line A-A and (B) is a cross-sectional view taken along a line B-B.
FIG. 4 includes cross-sectional views of the components shown in FIG. 2, in which (A) is a cross-sectional view taken along a line C-C and (B) is a cross-sectional view taken along a line D-D.
FIG. 5 is a plan view showing a motion of the flywheel during operation.
FIG. 6 is an overall configuration diagram showing a seat belt device according to an embodiment of the present invention.

### DESCRIPTION OF EMBODIMENTS

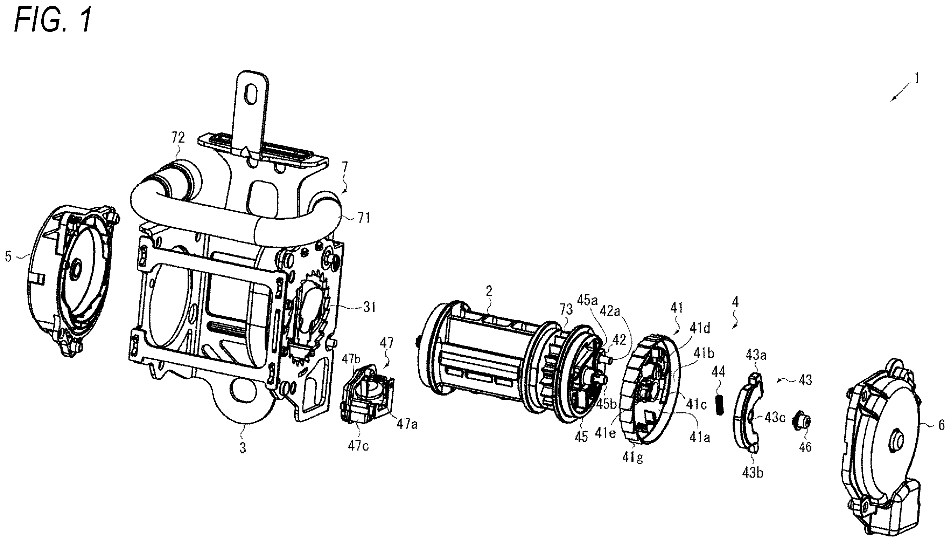

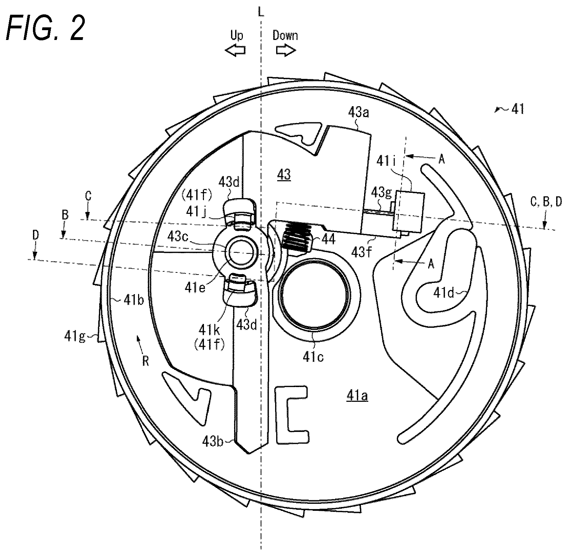

Hereinafter, embodiments of the present invention will be described with reference to FIGS. 1 to 6. Here, FIG. 1 is a component exploded diagram showing a retractor according to an embodiment of the present invention. FIG. 2 is a plan view showing a state in which a flywheel is assembled to a lock gear shown in FIG. 1. In FIG. 1, a webbing is omitted for convenience of description.

As shown in FIGS. 1 and 2, a retractor 1 according to an embodiment of the present invention includes a spool 2 configured to wind up a webbing that restrains an occupant, a base frame 3 configured to rotatably accommodate the spool 2, and a lock mechanism 4 configured to restrict the rotation of the spool 2, and the lock mechanism 4 includes a lock gear 41 disposed coaxially with the spool 2 so as to be rotatable relative to the spool 2, a pawl 42 disposed so as to be engageable with the base frame 3, a flywheel 43 disposed on the lock gear 41 and configured to move the pawl 42 by the relative rotation between the spool 2 and the lock gear 41, a hook spring 44 that biases the flywheel 43 in a direction opposite to a relative rotation direction during operation, and a locking base 45 disposed between the spool 2 and the lock gear 41.

The spool 2 is a winding drum that winds up the webbing, and for example, has one end rotatably supported by a spring unit 5 and the other end connected to the locking base 45. The locking base 45 is rotatably supported by a retainer cover 6 via a cap 46 (bearing).

The spring unit 5 is a component that biases the spool 2 in a winding-up direction, and has a built-in spiral spring. The retainer cover 6 is a component that accommodates the lock mechanism 4 or a vehicle sensor 47. The spring unit 5 and the retainer cover 6 are fixed directly or indirectly to the base frame 3.

The retractor 1 may have a pretensioner 7 that removes slack of the webbing in an emergency such as a vehicle collision. For example, the pretensioner 7 includes a pipe 71 capable of releasing a mass, a gas generator 72 disposed at a rear end of the pipe 71, and a ring gear 73 that is rotated by the mass released from the pipe 71 by an operation of the gas generator 72.

The pretensioner 7 is disposed, for example, inside the base frame 3 adjacent to the locking base 45. The pretensioner may be disposed outside the base frame 3 adjacent to the locking base 45, or may be disposed inside the spring unit 5.

The base frame 3 is, for example, a frame structure having a substantially rectangular U-shaped cross section, and is provided with a pair of wall members constituting side surfaces at both ends of a wall member constituting a back surface. The pair of wall members constituting the side surfaces have opening portions into which an end portion of the spool 2 (including the locking base 45) is to be inserted, and the engagement teeth 31 formed on an inner peripheral surface thereof. Distal ends of the pair of wall members constituting the side surfaces may be connected to a tie plate constituting a front surface.

The lock mechanism 4 is a mechanism that restricts the webbing from being pulled out in an emergency such as a vehicle collision. The lock mechanism 4 includes components such as the lock gear 41, the pawl 42, the flywheel 43, the locking base 45, the cap 46, and the vehicle sensor 47. The lock mechanism 4 is not limited to the shown configuration.

The locking base 45 is a substantially disk-shaped component connected to the end portion of the spool 2. The locking base 45 is inserted into an opening portion of the base frame 3, and is disposed such that an outer peripheral portion thereof faces the engagement teeth 31. The locking base 45 has a thickness capable of accommodating the pawl 42, and is provided with an accommodating portion 45a having a space capable of accommodating the pawl 42 at a part of the outer periphery. In addition, the locking base 45 has a shaft portion 45b being a part of a rotation shaft of the spool 2.

The vehicle sensor 47 includes, for example, a spherical mass 47a, a sensor lever 47b that is swung by the movement of the mass 47a, and a sensor cover 47c that accommodates the mass 47a and the sensor lever 47b. In the vehicle sensor 47, when a vehicle body decelerates or tilts by a predetermined value or more, the balance of the mass 47a is lost, the sensor lever 47b is pushed upward, a distal end of the sensor lever 47b is engaged with the lock gear 41, and the rotation of the lock gear 41 is restricted.

When the lock gear 41 rotates relative to the spool 2 (locking base 45), a pin 42a of the pawl 42 moves along a guide groove 41d, a distal end portion of the pawl 42 is pushed out in a radial direction from a side surface of the locking base 45, and engagement claws formed at the distal end portion are engaged with the engagement teeth 31 of the base frame 3. Due to the engagement, the rotation of the spool 2 is locked, and the pulling out of the webbing is restricted. The pawl 42 is biased inward in the radial direction by a pawl spring (not shown) so that the distal end portion (engagement claws) does not protrude outward in the radial direction from the side surface of the locking base 45.

The lock gear 41 includes, for example, a disk portion 41a that constitutes a flat surface facing the locking base 45, an outer peripheral wall 41b erected outward along an outer edge of the disk portion 41a, and a central portion 41c into which the shaft portion 45b of the locking base 45 is to be inserted. The outer peripheral wall 41b has engagement teeth 41g engageable with the sensor lever 47b of the vehicle sensor 47 on an outer peripheral surface thereof.

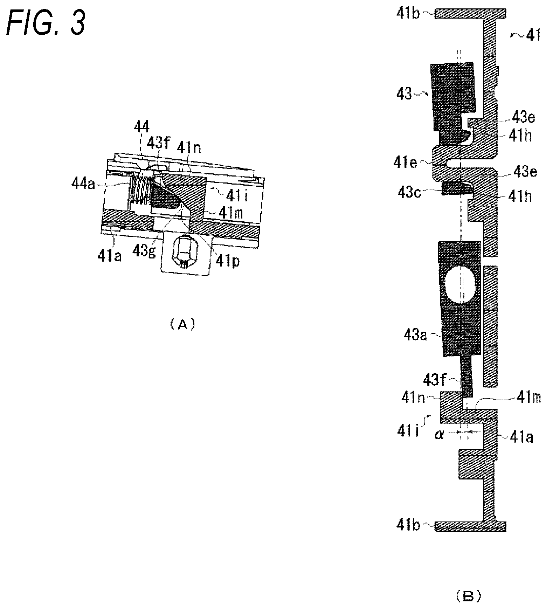

The disk portion 41a has the guide groove 41d that guides the pin 42a of the pawl 42, a pivot shaft 41e that pivotably supports the flywheel 43, a plurality of engagement claws 41f disposed on an outer periphery of the pivot shaft 41e, a guide portion 41h (see FIG. 3) formed along an outer periphery of a root portion of the pivot shaft 41e, and the like. The flywheel 43 is disposed in a space defined by the disk portion 41a and the outer peripheral wall 41b. The disk portion 41a may have, on a surface, a plurality of protrusions for specifying a space in which the flywheel 43 is accommodated.

The flywheel 43 has, for example, a curved or bent shape that allows the flywheel 43 to be inserted into a space surrounded by the disk portion 41a, the outer peripheral wall 41b, and the central portion 41c of the lock gear 41, and has a first end portion 43a located upstream in a relative rotation direction R and a second end portion 43b located downstream in the relative rotation direction R.

The flywheel 43 further has, for example, an insertion hole 43c that is formed in an intermediate portion between the first end portion 43a and the second end portion 43b and into which the pivot shaft 41e of the lock gear 41 is to be inserted, a plurality of engagement holes 43d that are disposed along an outer periphery of the insertion hole 43c and with which the engagement claws 41f of the lock gear 41 are engaged, and an annular convex portion 43e that is disposed along the guide portion 41h of the lock gear 41.

The engagement hole 43d restricts the movement of the engagement claw 41f in an axial direction and allows the movement of the engagement claw 41f in a pivoting direction when being engaged with the engagement claw 41f. Further, a relative rotation amount of the flywheel 43 is restricted by a circumferential length of the engagement hole 43d. In addition, the relative rotation of the flywheel 43 can be stabilized by guiding the convex portion 43e with the guide portion 41h.

The flywheel 43 has a protrusion 43f disposed at a distal end in the relative rotation direction R. The protrusion 43f is formed, for example, along an extension direction of the first end portion 43a. The protrusion 43f has a curved surface 43g on a surface opposite to the relative rotation direction R of the flywheel 43 or a surface close to the outer peripheral wall 41b of the lock gear 41.

The lock gear 41 includes a stopper 41i that is in contact with the protrusion 43f during non-operation of the flywheel 43 to tilt a posture of the flywheel 43, and releases the contact with the protrusion 43f during operation of the flywheel 43.

The plurality of engagement claws 41f include, for example, a first engagement claw 41j disposed on a first end portion 43a side of the flywheel 43 and a second engagement claw 41k disposed on a second end portion 43b side of the flywheel 43 with the pivot shaft 41e interposed therebetween. The engagement claws 41f may include an engagement claw other than the first engagement claw 41j and the second engagement claw 41k.

The flywheel 43 is formed, for example, in a direction in which the first end portion 43a and the second end portion 43b are substantially orthogonal to each other, and has the insertion hole 43c formed substantially at a center thereof. The first engagement claw 41j and the second engagement claw 41k are arranged, for example, to face each other on an extension line extending from the insertion hole 43c toward the second end portion 43b.

The hook spring 44 is inserted, for example, onto a support shaft 44a (see FIG. 3) formed between the flywheel 43 and the central portion 41c. The support shaft 44a may be formed on a lock gear 41 side or on a flywheel 43 side. The hook spring 44 is disposed so as to bias the protrusion 43f in a direction in which the protrusion 43f is in contact with the stopper 41i during non-operation.

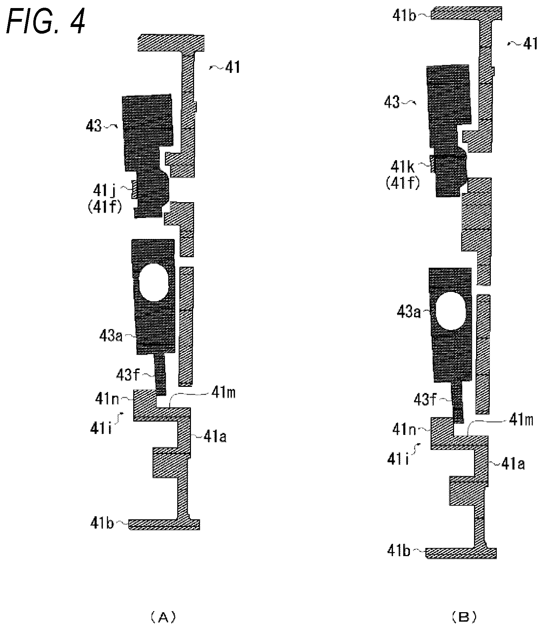

The configuration of the protrusion 43f of the flywheel 43 and the stopper 41i of the lock gear 41 will be described with reference to FIG. 3 (A) to FIG. 4 (B). Here, FIG. 3 includes cross-sectional views of components shown in FIG. 2, in which (A) is a cross-sectional view taken along a line A-A and (B) is a cross-sectional view taken along a line B-B. FIG. 4 includes cross-sectional views of the components shown in FIG. 2, in which (A) is a cross-sectional view taken along a line C-C and (B) is a cross-sectional view taken along a line D-D.

As shown in FIG. 3 (A), the stopper 41i is formed in a hook shape and has a support portion 41m erected from the lock gear 41 and a protruding portion 41n formed to be able to come into contact with an upper portion of the protrusion 43f. A lower surface of the protruding portion 41n constitutes a surface that comes into contact with the protrusion 43f, and the stopper 41i has a tapered surface 41p at a portion that comes into contact with the protrusion 43f.

The protrusion 43f may have the curved surface 43g at a portion that comes into contact with the tapered surface 41p of the stopper 41i. The protrusion 43f shown in FIG. 3 (A) has a tilted surface on an upper side, and the protrusion 43f may have at least a rounded curved surface 43g at a distal end (end portion on a side opposite to the relative rotation direction R). The curved surface 43g is not limited to the shown shape as long as it can smoothly move along the tapered surface 41p.

As shown in FIG. 3 (B), during the non-operation of the flywheel 43, that is, in a state in which the protrusion 43f is pressed against the tapered surface 41p of the stopper 41i, the protrusion 43f sinks so as to approach the disk portion 41a of the lock gear 41, and the posture of the flywheel 43 is tilted by an angle α. At this time, a part of the convex portion 43e of the flywheel 43 (portion on a side on which the protrusion 43f is formed) is pressed against the guide portion 41h of the lock gear 41, and constitutes a fulcrum at which the flywheel 43 tilts.

As shown in FIG. 2, the flywheel 43 can be distinguished into a Down side (right side in the figure) approaching the disk portion 41a of the lock gear 41 and an Up side (left side in the figure) moving away from the disk portion 41a of the lock gear 41 across a straight line L passing through a contact point between the convex portion 43e and the guide portion 41h during non-operation. The first engagement claw 41j and the second engagement claw 41k may be disposed so as to face each other along the straight line L.

The cross-sectional view taken along the line C-C of FIG. 2 shown in FIG. 4 (A) is a cross section passing through the first engagement claw 41j. In addition, the cross-sectional view taken along the line D-D of FIG. 2 shown in FIG. 4 (B) is a cross section passing through the second engagement claw 41k. As shown in FIG. 4 (A) and (B), during the non-operation of the flywheel 43, that is, in the state in which the protrusion 43f is pressed against the tapered surface 41p of the stopper 41i, a surface of the flywheel 43 is pressed against the first engagement claw 41j and the second engagement claw 41k.

Therefore, the flywheel 43 is supported by the stopper 41i, the engagement claws 41f (first engagement claw 41j and second engagement claw 41k), and the guide portion 41h during non-operation. That is, the flywheel 43 is supported by the lock gear 41 at three points, that is, one point (contact point between the protrusion 43f and the stopper 41i) on a surface on the Down side of the straight line L and two points (contact point between the first engagement claw 41j and the flywheel 43 and contact point between the second engagement claw 41k and the flywheel 43) on a surface on the Up side of the straight line L with a back surface (contact point between the convex portion 43e and the guide portion 41h) of the flywheel 43 on the straight line L shown in FIG. 2 as a fulcrum.

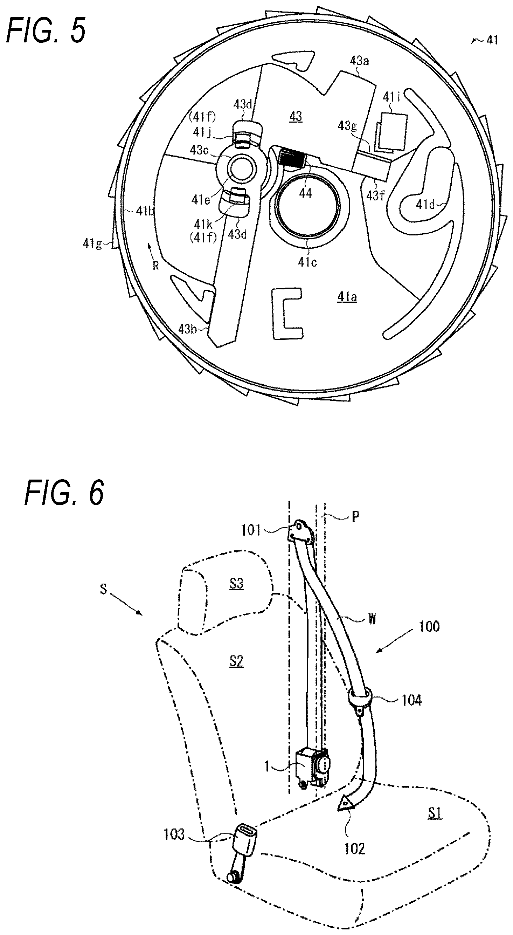

Here, FIG. 5 is a plan view showing a motion of the flywheel during operation. The flywheel 43 relatively rotates in the relative rotation direction R when the webbing is pulled out at a speed higher than a normal pull-out speed, and the second end portion 43b is engaged with internal teeth formed on the retainer cover 6.

At this time, as shown in FIG. 5, the relative rotation of the flywheel 43 causes the protrusion 43f to move in a direction away from the stopper 41i, and causes the protrusion 43f to move along the tapered surface 41p of the stopper 41i, and finally the contact between the protrusion 43f and the stopper 41i is released.

The tilting angle α of the flywheel 43 gradually decreases with the relative rotation of the flywheel 43 (protrusion 43f), and becomes 0° when the contact between the protrusion 43f and the stopper 41i is released. That is, the flywheel 43 quickly shifts to a posture perpendicular to the pivot shaft 41e during operation, and the flywheel 43 can be relatively rotated smoothly.

According to the retractor 1 of the present embodiment, during non-operation of the flywheel 43, the protrusion 43f formed on the flywheel 43 is in contact with the stopper 41i formed on the lock gear 41 to tilt the posture of the flywheel 43, thereby eliminating a gap in the flywheel 43 that is necessary during operation of the flywheel 43 and reducing the generation of vibration noise in the retractor 1 during non-operation.

Next, a seat belt device according to an embodiment of the present invention will be described with reference to FIG. 6. Here, FIG. 6 is an overall configuration diagram showing the seat belt device according to the embodiment of the present invention. In FIG. 6, for convenience of description, components other than the seat belt device are indicated by one-dot chain lines.

A seat belt device 100 according to the present embodiment shown in FIG. 6 includes a webbing W that restrains an occupant, the retractor 1 that winds up the webbing W, a guide anchor 101 that is provided on a vehicle body side and guides the webbing W, a belt anchor 102 that fixes the webbing W to the vehicle body side, a buckle 103 that is disposed on a side surface of a seat S on which the occupant sits, and a tongue 104 that is disposed on the webbing W. The retractor 1 has, for example, the configuration shown in FIG. 1.

Hereinafter, the components other than the retractor 1 will be briefly described. The seat S includes, for example, a seat portion S1 on which the occupant sits, a backrest portion S2 positioned behind the occupant, and a headrest portion S3 that supports a head of the occupant. The retractor 1 is built in, for example, a B-pillar P of the vehicle body.

In general, the buckle 103 is often disposed on a side surface of the seat portion S1, and the belt anchor 102 is often disposed on a lower surface of the seat portion S1. In addition, the guide anchor 101 is often disposed on the B-pillar P. The webbing W has one end connected to the belt anchor 102, and the other end connected to the retractor 1 via the guide anchor 101.

Therefore, when the tongue 104 is fitted into the buckle 103, the webbing W is pulled out from the retractor 1 while sliding through an insertion hole of the guide anchor 101. Further, when the occupant fastens the seat belt or releases the seat belt at the time of getting off the vehicle, the webbing W is wound up by an action of the spring unit 5 of the retractor 1 until a certain load is applied to the webbing W.

The seat belt device 100 has been described as being applied to the seat S arranged in a front seat of the vehicle, and the seat belt device 100 may also be applied to the seat S arranged in a rear seat of the vehicle. Furthermore, the seat belt device 100 may be applied to a seat belt device used in a ride vehicle other than the vehicle.

The present invention is not limited to the above embodiments, and various modifications can be made without departing from the scope of the present invention.

### REFERENCE SIGNS LIST

1: retractor
2: spool
3: base frame
4: lock mechanism
5: spring unit
6: retainer cover
7: pretensioner
31: engagement teeth
41: lock gear
41a: disk portion
41b: outer peripheral wall
41c: central portion
41d: guide groove
41e: pivot shaft
41f: engagement claw
41g: engagement teeth
41h: guide portion
41i: stopper
41j: first engagement claw
41k: second engagement claw
41m: support portion
41n: protruding portion
41p: tapered surface
42: pawl
42a: pin
43: flywheel
43a: first end portion
43b: second end portion
43c: insertion hole
43d: engagement hole
43e: convex portion
43f: protrusion
43g: curved surface
44: hook spring
44a: support shaft
45: locking base
45a: accommodating portion
45b: shaft portion
46: cap
47: vehicle sensor
47a: mass
47b: sensor lever
47c: sensor cover
71: pipe
72: gas generator
73: ring gear
100: seat belt device
101: guide anchor
102: belt anchor
103: buckle
104: tongue

## Claims

1. A retractor comprising:
a spool configured to wind up a webbing that restrains an occupant;
a base frame configured to rotatably accommodate the spool; and
a lock mechanism configured to restrict the rotation of the spool, wherein
the lock mechanism includes a lock gear disposed coaxially with the spool so as to be rotatable relative to the spool, a pawl disposed so as to be engageable with the base frame, a flywheel disposed on the lock gear and configured to move the pawl by a relative rotation between the spool and the lock gear, and a hook spring that biases the flywheel in a direction opposite to a relative rotation direction during operation,
the flywheel has a protrusion disposed at a distal end in the relative rotation direction, and
the lock gear has a stopper that is in contact with the protrusion to tilt a posture of the flywheel during non-operation, and releases the contact with the protrusion during operation.

2. The retractor according to claim 1, wherein the stopper has a tapered surface at a portion that comes into contact with the protrusion.

3. The retractor according to claim 1, wherein the stopper includes a support portion erected from the lock gear and a protruding portion formed to be able to come into contact with an upper portion of the protrusion.

4. The retractor according to claim 1, wherein the protrusion has a curved surface at a portion that comes into contact with the stopper.

5. The retractor according to claim 1, wherein the flywheel is supported by the lock gear at three points during non-operation.

6. The retractor according to claim 1, wherein
the lock gear includes a pivot shaft that pivotably supports the flywheel, a plurality of engagement claws arranged on an outer periphery of the pivot shaft, and a guide portion formed along an outer periphery of a root portion of the pivot shaft,
the flywheel includes an insertion hole into which the pivot shaft is to be inserted, and engagement holes with which the engagement claws are engaged, and
the flywheel is configured to be supported by the stopper, the engagement claws, and the guide portion during non-operation.

7. The retractor according to claim 1, wherein
the hook spring is disposed so as to bias the protrusion in a direction in which the protrusion is in contact with the stopper during non-operation.

8. A seat belt device comprising the retractor according to any one of claims 1 to 7.
